## Europäisches Patentamt

**European Patent Office**

**Office européen des brevets**

(11) Veröffentlichungsnummer: **0 374 344**

**A1**

(12) # EUROPÄISCHE PATENTANMELDUNG

(21) Anmeldenummer: 88890320.0

(51) Int. Cl.5: **F16D 3/60**

(22) Anmeldetag: **15.12.88**

(43) Veröffentlichungstag der Anmeldung:
**27.06.90 Patentblatt 90/26**

(84) Benannte Vertragsstaaten:
**AT DE FR**

(71) Anmelder: **DR. ING. GEISLINGER & CO. SCHWINGUNGSTECHNIK GESELLSCHAFT M.B.H.**
**Mayrwies-Esch 340**
**A-5023 Salzburg(AT)**

(72) Erfinder: **Peifer, Peter, Dipl.-Ing.**
**Borromäumstrasse 20**
**A-5020 Salzburg(AT)**

(74) Vertreter: **Hübscher, Gerhard, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7**
**A-4020 Linz(AT)**

(54) **Biegeelastische Kupplung.**

(57) Eine biegeelastische Kupplung (1) weist an den einander zugeordneten Anschlußflanschen (4, 5) der beiden Kupplungsteile (2, 3) über Befestigungsschrauben (9) angelenkte Federlaschen (6, 7) zur Drehmomentenübertragung auf.

Ohne die Gefahr eines gegenseitigen Verspannens eine formschlüssige Verbindung für die Federlaschen-Anlenkung zu erreichen, sind als Befestigungsschrauben Paßschrauben (9) vorgesehen und setzt sich einer (5) der Anschlußflanschen (4, 5) aus einzelnen, jeweils eine Federlaschen-Anlenkstelle (12) bildenden Sektorstücken (11) od. dgl. zusammen.

FIG.2

EP 0 374 344 A1

## Biegeelastische Kupplung

Die Erfindung bezieht sich auf eine biegeelastische Kupplung, mit an den einander zugeordneten Anschlußflanschen der beiden Kupplungteile über Befestigungsschrauben angelenkten Federlaschen zur Drehmomentenübertragung.

Diese biegeelastischen Kupplungen dienen zum Ausgleich von radialen, axialen und winkligen Verlagerungen zwischen zwei Wellen, da die an ihren Enden an den an- bzw. abtriebsseitigen Anschlußflanschen befestigten Federlaschen auftretenden Relativbewegungen zwischen den beiden Anschlußflanschen durch elastisches Verbiegen nachgeben können. Es gibt meist mehrere gleichmäßig um den Umfang verteilte, im wesentlichen tangential angeordnete Federlaschen, die auch paarweise gekreuzt sein können, wobei allerdings bisher zur Befestigung der Federlaschen an den beiden Flanschen aus herstellungstechnischen Gründen allgemein Durchschrauben eingesetzt werden, so daß die Übertragung der Laschenkraft auf die Flansche lediglich durch schraubenkraftbedingte Reibung erfolgt und die maximal übertragbare Laschenkraft daher von der erreichbaren Reibung abhängt. Bei der Verwendung von Paßschrauben stünde jedoch zusätzlich zu der von der Schraubenvorspannkraft bewirkten Reibungskraft noch die durch den Schraubenquerschnitt als Scherfläche nutzbare Scherkraft zur Verfügung, was eine wesentliche Steigerung der möglichen maximalen Drehmomentenübertragung mit sich brächte und außerdem ein Relativverschieben zwischen Laschen und Flanschen bei die Reibungskraft übersteigenden Laschenkräften ausschließe. Die Verwendung von Paßschrauben ist aber bisher wegen der in Kauf zu nehmenden Herstellungstoleranzen nicht möglich. Die Teilungsgenauigkeit der Bohrungen in den Flanschen einerseits und der Bohrungsabstand in den Laschen anderseits läßt sich nämlich mit üblichen Bearbeitungsmaschinen nicht so exakt aufeinander abstimmen, daß alle Teile spielfrei zusammenpassen, sondern es käme zwangsweise zu einem gegenseitigen Verspannen. Abhilfe könnte nur eine gemeinsame Bearbeitung der Teile einer Kupplung bringen, wodurch aber wiederum die Austauschbarkeit verlorenginge.

Da demnach eine getrennte Fertigung von Laschen und Flanschen mit der erforderlichen Genauigkeit wirtschaftlich undurchführbar und die gemeinsame Fertigung wegen der fehlenden Austauschbarkeit im Reparaturfall unzulässig ist, müssen bisher unter Verzicht auf Paßschrauben Durchschrauben mit entsprechend großem Spiel zur Federlaschenanlenkung verwendet werden.

Der Erfindung liegt daher die Aufgabe zugrunde, diese Mängel zu beseitigen und eine biegeelastische Kupplung der eingangs geschilderten Art zu schaffen, die auf rationelle Weise eine formschlüssige Verbindung zwischen Federlaschen und Flanschen erlaubt und damit eine rutschfeste, höchstbelastbare Anlenkung der Federlaschen an den jeweiligen Anschlußflanschen gewährleistet.

Die Erfindung löst diese Aufgabe dadurch, daß als Befestigungsschrauben Paßschrauben vorgesehen sind und sich einer der Anschlußflansche aus einzelnen, jeweils eine Federlaschen-Anlenkstelle bildenden Sektorstücken od. dgl. zusammmsetzt. Da der eine Anschlußflansch in voneinander unabhängige Sektorstücke zerlegt ist und jedem Sektorstück nur eine einzige Anlenkstelle zugehört, können sich diese Sekorstücke und damit die Anlenkstellen entsprechend den jeweiligen tatsächlich vorhandenen Abmessungen und toleranzbedingten Teilungsungenauigkeiten auf die verwendeten Federlaschen einstellen, so daß die Laschenbohrungen exakt auf die Flanschenbohrungen zu liegen kommen und zum Anlenken der Federlaschen Paßschrauben einsetzbar sind, ohne ein Verspannen der Teile befürchten zu müssen. Gleichgültig, ob an der Anlenkstelle jedes Sektorstückes nur eine oder auch zwei Federlaschen befestigt werden, läßt sich diese Anlenkstelle jeweils exakt so auf die zugehörige Anlenkstelle bzw. zugehörigen Anlenkstellen des anderen einstückigen Anschlußflansches ausrichten, daß sich die Lage der Sektorstücke individuell an die herstellungsbedingten Ungenauigkeiten der Teile bzw. Bohrungsteilungen anpaßt und den einwandfreien Einsatz von Paßschrauben gewährleistet. Auf rationelle Weise kommt es daher zu einer formschlüssigen Verbindung bei der Federlaschen-Anlenkung mit all ihren Vorteilen.

Ist der äußere der beiden Anschlußflansche in Sektorstücke unterteilt, ergeben sich günstige Kräfteverhältnisse und bessere Verbindungsmöglichkeiten für den in die Sektorstücke unterteilten Anschlußflansch beim Kupplungseinbau.

An und für sich können die Sektorstücke nach der Montage der Federlaschen beim Einbau der Kupplung in einen Antriebsstrang auf jede geeignete Weise mit dem zugehörigen Kupplungsflansch einer Antriebswelle od. dgl. verbunden werden, doch weist zweckmäßigerweise jedes Sektorstück neben der Paßschraubenbohrung für die Federlaschen-Anlenkung zwei Durchschraubenbohrungen für die Verbindung mit einem Kupplungsflansch einer Welle od. dgl. auf, so daß mit wenig Aufwand eine ausreichend feste Schraubverbindung mit dem Kupplungsflansch möglich ist und dennoch ein entsprechend großes Spiel für die Einstellung der Sektorstücke berücksichtigt werden kann.

In der Zeichnung ist der Erfindungsgegenstand beispielsweise veranschaulicht, und zwar zeigen

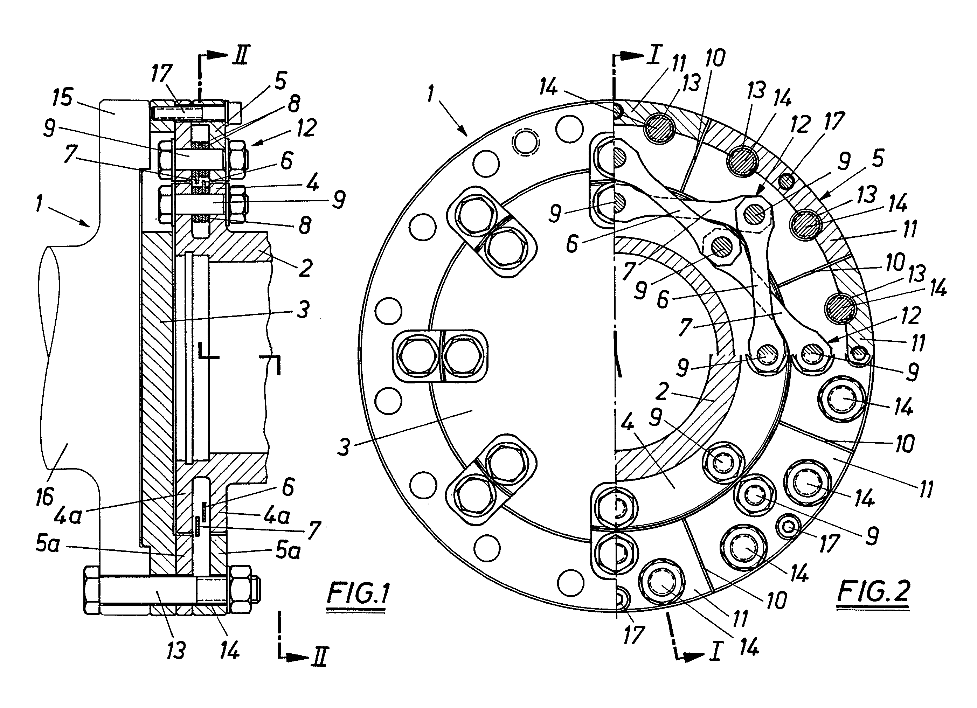

Fig. 1 eine erfindungsgemäße biegeelastische Kupplung im Axialschnitt nach der Linie I-I der Fig. 2 und

Fig. 2 Jeweils hälftig eine Stirnansicht und einen achsnormalen Querschnitt nach der Linie II-II der Fig. 1.

Eine biegeelastische Kupplung 1 weist zwei Kupplungsteile 2, 3 auf, deren ineinandergreifende Anschlußflansche 4, 5 über Federlaschen 6, 7 miteinander in Verbindung stehen. Die gleichmäßig um den Umfang der Anschlußflansche 4, 5 verteilten Federlaschen 6, 7 sind paarweise gekreuzt angeordnet und dienen zur Drehmomentenübertragung, wobei sie eine radiale, axiale oder winkelige Verlagerung der beiden Kupplungsteile 2, 3 durch elastisches Verbiegen ausgleichen.

Zur Anlenkung der Federlaschen 6, 7 sind die Anschlußflansche 4, 5 jeweils in Form zweier Flanschringe 4a, 5a ausgebildet, zwischen denen die Laschenenden unter Beilage von Distanzscheiben 8 festgespannt werden, und um zum Festspannen Paßschrauben 9 verwenden zu können, ist der äußere Anschlußflansch 5 in einzelne, durch radiale Spalte 10 voneinander getrennte Sektorstücke 11 zerlegt, die jeweils nur eine Anlenkstelle 12 für die Federlaschen 6, 7 bilden. Dadurch können sich diese Sektorstücke 11 unabhängig voneinander frei an die jeweiligen herstellungsbedingten Teilungenauigkeiten u. dgl. von Laschen 6, 7 und Flanschenbohrungen einstellen, so daß Laschen 6, 7 und Anschlußflansche 4, 5 auch mit Hilfe von Paßschrauben 9 exakt und spannungsfrei miteinander verbunden werden können.

Ist die Kupplung 1 zusammengebaut, d.h. sind die Laschen 6, 7 ordnungsgemäß über die Paßschrauben 9 an den Anschlußflanschen 4, 5 angelenkt, kann die Kupplung 1 in üblicher Weise in einen entsprechenden Antriebsstrang eingesetzt werden, wobei zur Befestigung des Kupplungsteiles 3 mit seinem unterteilten äußeren Anschlußflansch 5 jedes Sektorstück 11 neben der Paßschraubenbohrung für die Federlaschen-Anlenkstelle 12 zwei Durchschraubenbohrungen 13 aufweist, so daß dieser Kupplungsteil 3 wie bisher über Durchschrauben 14 mit einem nur angedeuteten Kupplungsflansch 15 einer Welle 16 od. dgl. verbunden werden kann. Über diese Durchschrauben 14, die wegen der individuellen Lageeinstellungen der Sektorstücke 11 mit entsprechend großem Spiel in den Bohrungen 13 sitzen, wird nach dem Kupplungseinbau auch die Verbindung zwischen dem scheibenförmigen Kupplungsteil 3 und den einzelnen Sektorstücken 11 des Anschlußflansches 5 aufrecht erhalten, für welche Verbindung vor einem Einbau Fixierschrauben 17 vorgesehen sind.

Durch die Teilung des äußeren Anschlußflansches 5 in einzelne, jeweils einer Federlaschen-Anlenkstelle 12 zugeordnete Sektorstücke 11 ist es auf rationelle Weise möglich, zur Anlenkung der Federlaschen 6, 7 an den Anschlußflanschen 4, 5 Faßschrauben 9 zu verwenden und damit, ohne ein Verspannen der Federlaschen 6, 7 befürchten zu müssen, eine formschlüsse Verbindung für die Laschen-Anlenkung mit all ihren Vorteilen zu erreichen.

## Ansprüche

1. Biegeelastische Kupplung, mit an den einander zugeordneten Anschlußflanschen der beiden Kupplungsteile über Befestigungsschrauben angelenkten Federlaschen zur Drehmomentenübertragung, dadurch gekennzeichnet, daß als Befestigungsschrauben Paßschrauben (9) vorgesehen sind und sich einer (5) der Anschlußflansche (4, 5) aus einzelnen, jeweils eine Federlaschen-Anlenkstelle (12) bildenden Sektorstücken (11) od. dgl. zusammensetzt.

2. Biegeelastische Kupplung nach Anspruch 1, dadurch gekennzeichnet, daß der äußere (5) der beiden Anschlußflansche (4, 5) in Sektorstücke (11) unterteilt ist.

3. Biegeelastische Kupplung nach Anspruch 1 oder 2, dadurch gekennzeichnet, daß jedes Sektorstück (11) neben der Faßschraubenbohrung (12) für die Federlaschen-Anlenkung zwei Durchschraubenbohrungen (13) für die Verbindung mit einem Kupplungsflansch (15) einer Welle (16) od. dgl. aufweist.

_FIG.1_

_FIG.2_

EP 0 374 344 A1

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 406 681 (HACKFORTH) <br> * Das ganze Dokument * <br> ----- | 1-3 | F 16 D 3/60 |

RECHERCHIERTE
SACHGEBIETE (Int. Cl.5)

F 16 D

Der vorliegende Recherchenbericht wurde für alle Patentansprüche erstellt

| Recherchenort | Abschlußdatum der Recherche | Prüfer |
|---|---|---|
| DEN HAAG | 17-08-1989 | ORTHLIEB CH.E. |

EPO FORM 1503 03.82 (P0403)